Europäisches Patentamt

European Patent Office

Office européen des brevets

(11) Veröffentlichungsnummer: **0 441 147 A1**

(12) **EUROPÄISCHE PATENTANMELDUNG**

(21) Anmeldenummer: 91100613.8

(22) Anmeldetag: 18.01.91

(51) Int. Cl.5: **F16D 13/71**

(30) Priorität: 07.02.90 HU 385190

(43) Veröffentlichungstag der Anmeldung:
14.08.91 Patentblatt 91/33

(84) Benannte Vertragsstaaten:
AT DE FR GB IT NL SE

(71) Anmelder: Csepel Autogyár
Pf. 38
H-2311 Szigetszentmiklos(HU)

(72) Erfinder: Geiger, Gyula, Dipl.-Ing.
Táncsics M. u. 82
H-1208 Budapest(HU)

Erfinder: Töröcsik, Lászl , Dipl.-Ing.
Kakukk u. 10/b
H-1126 Budapest(HU)
Erfinder: Kovács, István, Dipl.-Ing.
Radn ti u. 5.
H-2310 Szigetszentmikl s(HU)
Erfinder: Nagy, István, Dipl.-Ing.
Gy ni G. u. 15
H-2330 Dunaharaszti(HU)

(74) Vertreter: Patentanwälte Viering & Jentschura
Steinsdorfstrasse 6
W-8000 München 22(DE)

(54) **Reibtellerkupplung mit Membranfeder, insbesondere für Kraftfahrzeuge.**

(57) Reibtellerkupplung mit Membranfeder, insbesondere für Kraftfahrzeuge, mit einem Kupplungsgehäuse (1), einer Druckplatte (4), mindestens drei diese verbindenden, im wesentlichen tangentialen Federklammern (5), deren Enden mittels Verbindungselementen (6) am Kupplungsgehäuse (1) und an der Druckplatte (4) befestigt sind. Die Verbindungselemente (6) sind an den Federklammern (5) drehfest befestigt, in im Kupplungsgehäuse (1) bzw. in der Druckplatte (4) ausgebildeten Bohrungen (7, 8) drehbar und gegen axial gerichtete Bewegungen locker, mit lösbarer Verbindung gesichert.

Fig. 2

## REIBTELLERKUPPLUNG MIT MEMBRANFEDER, INSBESONDERE FÜR KRAFTFAHRZEUGE

Die Erfindung bezieht sich auf eine mit einer Membranfeder versehene Reibtellerkupplung, insbesondere für Kraftfahrzeuge, deren Druckplatte im Kupplungsgehäuse mittels mindestens dreier im wesentlichen tangentialer Federklammern aufgehängt ist, die an ihren Enden über Verbindungselemente befestigt sind.

Es ist bekannt, daß bei den Reibtellerkupplungen mit Membranfeder die Druckplatte mittels im allgemeinen dreier Federklammern am Kupplungsgehäuse aufgehängt ist. Diese Federklammern oder Blattfedern haben eine doppelte Aufgabe. Einerseits bieten sie eine flexible Aufhängung, wodurch die axiale Bewegung der Druckplatte ermöglicht wird, andererseits nehmen sie an der Drehmomentübertragung teil. Diese Federklammern sind mittels Vernietung am Kupplungsgehäuse bzw. an der Druckplatte befestigt. Diese Befestigungsart ist aus den FR-B-2.558.227 oder US-A-4.273.228 gut erkennbar.

Es gibt auch eine derartige Befestigungsart, bei der das Befestigungselement nicht eine Niete, sondern eine Schraube ist. Eine derartige Lösung ist in der DE-B-891.803 beschrieben. Es ist aber selten üblich, lösbare Befestigungen zu verwenden, denn zum Austauschen des Reibtellers braucht die Druckplatte vom Kupplungsgehäuse nicht abmontiert zu werden.

Diese steifen, lösbaren oder nicht lösbaren Befestigungsarten sind bei den heute verbreitet verwendeten Kupplungskonstruktionen akzeptierbar. Bei den bestehenden Konstruktionen beträgt der zwischen den Federklammern und der Ebene der Druckplatte eingeschlossene Neigungswinkel Null oder höchstens einige Grad (der letzterwähnte Neigungswinkel wird in denjenigen Fällen verwendet, wenn mit der Federklammer auch die bei dem Lösen der Kupplung erforderliche axiale Bewegung der Druckplatte unterstützt werden soll). Bei derartigen Anordnungen ist nämlich die die Federklammer in ihrer eigenen Ebene, das heißt um ihre Aufhängungspunkte, zum Verdrehen zwingende Kraft nur sehr klein.

Die oben erwähnte Kraft ist die Folge von zwei während des Betriebs auftretenden physikalischen Änderungen.

Die eine physikalische Änderung ist, daß sich die Druckplatte bei dem Lösen-Einrücken der Kupplung in axialer Richtung bewegt, und damit zusammen sich die Lage der Aufhängungspunkte der Federklammern im Vergleich zueinander in allen drei Richtungen des Raumes verändert (dies wird im Zusammenhang mit dem Ausführungsbeispiel der Erfindung ausführlich beschrieben).

Die andere physikalische Änderung ist die Aufwärmung der ganzen Kupplung. Während des Betriebs wärmt sich nämlich die Druckplatte stärker auf und dehnt sich stärker aus als das Kupplungsgehäuse, so daß sich die radiale Lage der Aufhängungspunkte in unterschiedlichem Ausmaß verändert.

Solange die Aufhängungsgeometrie so ist, daß diese Bewegungen gering sind, sind die entstehenden Kräfte so klein, daß die dadurch verursachte Deformation - obwohl diese nachteilig ist - die Federklammern nicht beschädigt.

Ein weiterer Nachteil der nicht lösbaren Befestigung zeigt sich, wenn es bei der Reparatur der Kupplung notwendig wird, die Druckplatte vom Kupplungsgehäuse abzumontieren. Eine vernietete Befestigung erschwert diese Reparatur in großem Maße. Es gibt aber eine derartige Variante der Anordnung der Federklammern, bei der die Federklammern einen relativ großen Neigungswinkel mit der Ebene der Druckplatte einschließen. Eine derartige Lösung ist aus der HU-A-188 453 zu erkennen, bei der die Federklammern neben der Aufhängung zur Aufgabe haben, die Druckplatte auf den Reibteller zu drücken, wodurch das übertragbare Drehmoment erhöht wird. Da bei dieser Lösung die Druckkraft desto größer ist, je größer der Neigungswinkel der Federklammer ist, wird ein relativ großer Neigungswinkel verwendet.

Bei einer derartigen Anordnung ist aber die axiale Bewegung der Federklammerenden auch mit einer bedeutenden tangential gerichteten Bewegung verbunden, was die Federklammern zu einer größeren Verdrehung um ihre Aufhängungspunkte zwingt. Aus diesem Grund kann hier die steife Befestigung nicht verwendet werden. Das Problem wurde durch Verwendung derartiger Bolzen gelöst, um welche sich die Federklammern verdrehen können.

Obwohl dies aus dem Gesichtspunkt des Betriebes eine zweifellos adäquate Lösung ist, kann am Umfang der Bohrung der dünnen Federklammern und an der Aufliegefläche des Bolzens ein bedeutender Verschleiß festgestellt werden.

Der Austausch der Bolzen oder der Federklammern ist scheinbar dadurch erleichtert, daß die Bolzen sowohl in der Druckplatte als auch im Kupplungsgehäuse locker angeordnet sind, in der Praxis aber muß das Kupplungsgehäuse im Falle eines Austausches aus dem Kraftfahrzeug herausgenommen werden.

Es ist also ersichtlich, daß auch die Befestigung mit Bolzen Nachteile aufweist.

Zielsetzung der Erfindung ist es, für die Befestigung der Federklammern eine derartige Lösung zu finden, bei der am Umfang der Bohrung der Federklammer und an der Aufliegefläche des Bolzens kein Verschleiß auftritt und bei der auch die Reparatur erleichtert ist.

Die Zielsetzung wurde aufgrund derjeniger Erkenntnis erreicht, daß der Verschleiß nur so vermieden werden kann, wenn der Bolzen und die Federklammer verdrehfest aneinander befestigt werden. Dadurch kann sich nämlich der Bolzen nur in der Druckplatte bzw. im Kupplungsgehäuse verdrehen. Diejenige Weise, daß sich der Bolzen sowohl in der Federklammer als auch in der Druckplatte bzw. im Kupplungsgehäuse verdrehen kann, würde nämlich nicht zum Erfolg führen, denn die tatsächliche Verdrehung der einzelnen Bauteile im Vergleich zueinander kann nicht beeinflußt werden.

Die Erfindung ist also eine Reibtellerkupplung mit Membranfeder, insbesondere für Kraftfahrzeuge, mit einem Kupplungsgehäuse, einer Druckplatte und mindestens drei diese verbindenden, im wesentlichen tangentialen Federklammern, wobei die Enden der Federklammern mittels Verbindungselementen am Kupplungsgehäuse und an der Druckplatte befestigt sind, und zwar derart, daß die Verbindungselemente an den Federklammern drehfest festgelegt sind, an Bohrungen im Kupplungsgehäuse bzw. in der Druckplatte locker angepaßt sind und gegen axial gerichtete Bewegungen locker, mit lösbarer Verbindung gesichert sind.

Bei einer vorteilhaften Ausführungsform der erfindungsgemäßen Kupplung ist am einen Ende des Verbindungselementes mit einer Schulter ein kurzer Bolzenteil ausgebildet, auf dem die Federklammer sitzt und mit bleibender Deformation des Bolzenteiles befestigt ist.

Die Erfindung wird nachstehend anhand eines Ausführungsbeispiels mit Hilfe der Zeichnung näher erläutert.

Es zeigt:

Fig. 1 - das montierte Kupplungsgehäuse in Draufsicht,

Fig. 2 - die vergrößerte Darstellung des Teilschnittes I-I nach Fig. 1.

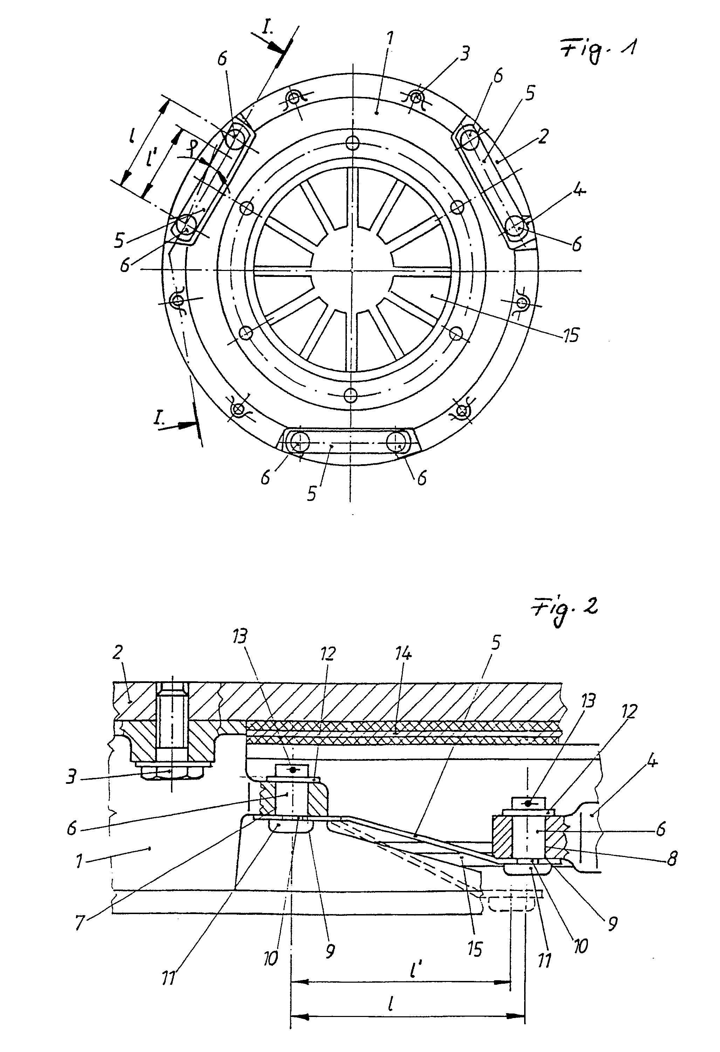

Das in Fig. 1 dargestellte Kupplungsgehäuse 1 ist mittels Schrauben 3 am Schwungrad 2 befestigt. Die Druckplatte 4 ist mittels in axialer Richtung schräg angeordneter Federklammern oder Blattfedern 5 am Kupplungsgehäuse 1 aufgehängt, wobei die Aufhängungsstelle am Kupplungsgehäuse 1 näher am Schwungrad 2 als die an der Druckplatte 4 liegt. Die Federklammern 5 sind mit Verbindungselementen 6 befestigt.

In Fig. 2 ist es zu sehen, daß im Kupplungsgehäuse 1 eine Bohrung 7, und in der Druckplatte 4 eine Bohrung 8 senkrecht zur Ebene der Druckplatte ausgebildet sind. In die Bohrungen 7 bzw. 8 paßt der zylindrische Teil je eines bolzenförmigen Verbindungselementes 6.

Am einen Ende des Verbindungselementes 6 ist eine Schulter 9 und angrenzend an die Schulter 9 ist ein kurzer Bolzenteil 10 ausgebildet. Das Ende der Federklammer 5 ist mit einer Bohrung auf den Bolzenteil 10 gesteckt und am Ende des Bolzenteiles 10 ist ein Kopf 11 angestaucht, der die Federklammer 5 und das Verbindungselement 6 drehfest aneinander befestigt.

Am anderen Ende des Verbindungselementes 6, an dem aus dem Kupplungsgehäuse 1 bzw. der Druckplatte 4 herausragenden Teil, ist je eine Unterlegscheibe 12 aufgesteckt und die Verbindungselemente 6 sind mittels Splintbolzen 13 gesichert.

Zwischen dem Schwungrad 2 und der Druckplatte 4 ist der Reibteller 14 zu finden, wogegen sich die Membranfeder 15 an der entgegengesetzten Seite der Druckplatte 4 abstützt.

Die erfindungsgemäße Befestigung erfüllt ihre Aufgabe wie folgt.

In Fig. 2 ist die Kupplung in eingerücktem Zustand zu sehen. Hier ist 1 der Abstand zwischen den beiden Aufhängungspunkten der Federklammer 5. Wenn die Kupplung im gelösten Zustand ist, gelangt die Federklammer 5 in die mit gestrichelter Linie angedeutete Lage, hier ist 1' der Abstand zwischen den beiden Aufgehängungspunkten.

In Fig. 1 ist es zu sehen, daß wenn sich die Länge 1 der Federklammer 5 auf 1' vermindert, die Federklammer sich um ihrem im Kupplungsgehäuse 1 befindlichen Aufhängungspunkt im Vergleich zu ihrer ursprünglichen Lage um einen Winkel phi verdreht. Selbstverständlich verdreht sie sich ebenso um ihrem in der Druckplatte 4 befindlichen Aufhängungspunkt.

Wenn sich die Federklammer 5 auf die oben beschriebene Weise verdreht, verdrehen sich mit ihr zusammen auch die an ihr festgelegten Verbindungselemente 6, da sich diese in der Bohrung 7 bzw. 8 gleitend geführt sind. Auf diese Weise bewegen sich der Mantel der Bohrungen 7 bzw. 8 und die Oberflächen der Verbindungselemente 6 gegeneinander. Da diese Oberflächen relativ groß sind, verursacht die die Drehmomentübertragung erzeugende tangentiale Kraft keinen Verschleiß.

Mit dieser Lösung ist auch die Montage wesentlich erleichtert, sowohl bei dem ersten Einbauen als bei der Service-Versorgung.

Durch die Befestigung der Verbindungselemente 6 an der Federklammer 5 können die Verbindungselemente 6 auf leichte Weise in die am Kupplungsgehäuse 1 befindliche Bohrung 7 eingepaßt werden, dann kann nach Sicherung mittels Splintbolzen 13 auch die Druckplatte 4 mit ihren Bohrungen 8 aufgesteckt werden, und mittels weiterer Splintbolzen 13 kann auch die Druckplatte 4 gesichert werden.

Es soll erwähnt werden, daß die erfindungsgemäße Lösung auf vorteilhafte Weise auch bei derartigen Kupplungen verwendet werden kann, bei denen man mit einer Verdrehung der Federklammer nicht rechnen muß. Die Leichtheit der Montage bzw. der Wartung ist nämlich auch hier bedeutend.

Schließlich soll auch darauf hingewiesen werden, daß zahlreiche andere Lösungen sowohl zur Ausbildung der Verbindungselemente als auch zu deren Befestigung an den Federklammern, und zu ihrer Sicherung im Kupplungsgehäuse bzw. in der Druckplatte bestehen. So z.B. kann eine von der Kreisform abweichende Form des in der Federklammer sitzenden Bolzenteils auch ohne Anstauchung des Kopfes die drehfeste Verbindung sicherstellen. Es können auch Gewindebefestigungen mit Erfolg verwendet werden.

**Patentansprüche**

1. Reibtellerkupplung mit Membranfeder insbesondere für Kraftfahrzeuge, mit einem Kupplungsgehäuse (1), einer Druckplatte (4) und mindestens drei diese verbindenden, im wesentlichen tangentialen Federklammern (5), deren Enden mittels je eines Verbindungselementes (6) am Kupplungsgehäuse (1) und an der Druckplatte (4) befestigt sind, dadurch gekennzeichnet, daß die Verbindungselemente (6) an den Federklammern (5) drehfest befestigt sind, in im Kupplungsgehäuse (1) bzw. in der Druckplatte (4) ausgebildeten Bohrungen (7, 8) drehbar geführt sind und gegen axial gerichtete Bewegungen locker mit lösbarer Verbindung gesichert sind.

2. Kupplung nach Anspruch 1, dadurch gekennzeichnet, daß am einen Ende des Verbindungselementes (6) mit einer Schulter (9) ein kurzer Bolzenteil (10) ausgebildet ist, auf dem die Federklammer (5) sitzt und auf dem Bolzenteil (10) mit bleibender Deformation desselben festgelegt ist.

Fig. 1

Fig. 2

Europäisches
Patentamt

**EUROPÄISCHER
RECHERCHENBERICHT**

Nummer der Anmeldung

**EP 91 10 0613**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-5 368 64   (BORG-BECK)<br>* Seite 2, Zeilen 80-83; Figur 4 *<br>– – – | 1,2 | F 16 D 13/71 |
| A | EP-A-0 195 274   (AISIN SEIKI)<br>* Spalte 2, Zeilen 58-66; Figuren 2,5 *<br>– – – | 1,2 | |
| A | FR-A-2 520 823   (VALEO)<br>* Figuren 11,13,16 *<br>– – – | 1,2 | |
| A | DE-A-3 632 435   (AISIN SEIKI)<br>* Figur 4 *<br>– – – | 1,2 | |
| A | US-A-4 019 346   (FUKUDA)<br>– – – – – | | |

| | RECHERCHIERTE SACHGEBIETE (Int. Cl.5) |
|---|---|
| | F 16 D |

Der vorliegende Recherchenbericht wurde für alle Patentansprüche erstellt

| Recherchenort | Abschlußdatum der Recherche | Prüfer |
|---|---|---|
| Den Haag | 25 April 91 | ORTHLIEB CH.E. |